# EUROPEAN PATENT APPLICATION

(11) **EP 4 553 927 A1**
(43) Date of publication of application: **14.05.2025**
(21) Application number: 23860876.4
(22) Date of filing: 30.08.2023
(51) Int. Cl.: H01M 4/525, H01M 4/505, C01G 53/00, H01M 4/02

(54) **CATHODE ACTIVE MATERIAL PRECURSOR, PREPARATION METHOD THEREFOR, METHOD FOR PREPARING CATHODE ACTIVE MATERIAL BY USING SAME, AND CATHODE ACTIVE MATERIAL**

(30) Priority: 02.09.2022 KR 20220111520
(71) Applicant: LG Chem, Ltd., Yeongdeungpo-gu Seoul 07336 (KR)
(72) Inventor: GU, Ye Hyeon, Daejeon 34122 (KR); HWANG, Joo Kyoung, Daejeon 34122 (KR); JEONG, Jin Hoo, Daejeon 34122 (KR); SHIM, Jong Hyun, Daejeon 34122 (KR); LEE, Ji Young, Daejeon 34122 (KR); RYU, Hyeon Mo, Daejeon 34122 (KR)
(74) Representative: Hoffmann Eitle
(86) International application number: PCT/KR2023/012883
(87) International publication number: WO 2024/049200

(57) **Abstract**

The present invention relates to a cathode active material precursor capable of implementing a cathode active material in the form of a uniform discrete particle and, specifically, to a cathode active material precursor, a preparation method therefor, a method for preparing a cathode active material by using same, and a cathode active material, the precursor comprising a lithium composite transition metal oxide in a discrete particle form, which has a molar ratio (Li/Me) of lithium to total transition metals of 0.01-0.7, and having a pellet density of 3.0 g/cm³ to 4.0 g/cm³.

## Description

### TECHNICAL FIELD

### Cross-reference to Related Applications

This application claims priority from Korean Patent Application No. 10-2022-0111520, filed on September 2, 2022, the disclosure of which is incorporated by reference herein.

### Technical Field

The present invention relates to a positive electrode active material precursor, a method of preparing the same, a method of preparing a positive electrode active material using the same, and the positive electrode active material.

### BACKGROUND ART

Demand for secondary batteries as an energy source has been significantly increased as technology development and demand with respect to mobile devices and electric vehicles have recently increased. Among these secondary batteries, lithium secondary batteries having high energy density, high voltage, long cycle life, and low self-discharging rate have been commercialized and widely used.

Lithium transition metal oxides, such as lithium cobalt oxide such as LiCoO₂, lithium nickel oxide such as LiNiO₂, lithium manganese oxide such as LiMnO₂ or LiMn₂O₄, or lithium iron phosphate such as LiFePO₄, have been developed as a positive electrode active material of the lithium secondary battery, and, recently, lithium composite transition metal oxides including two or more types of transition metals, for example, Li[NiₐCo_{b}Mn_{c}]O₂, Li[NiₐCo_{b}Al_{c}]O₂, and Li[NiₐCo_{b}Mn_{c}Al_{d}]O₂, have been developed and widely used.

Lithium transition metal oxides developed so far are typically prepared by mixing a transition metal hydroxide with a lithium-containing raw material and then performing a high-temperature heat treatment. In this case, in order to prepare a lithium transition metal oxide in a form of a single particle which has better strength and thermal stability than a lithium transition metal oxide in a form of a secondary particle, a method of slightly increasing the temperature during the high-temperature heat treatment is being used.

However, in a case in which the lithium transition metal oxide in the form of a single particle is prepared by mixing the transition metal hydroxide with the lithium-containing raw material and then sintering (over-sintering) the mixture at a higher temperature than when the conventional lithium transition metal oxide in the form of a secondary particle is prepared, since there is a limit to growing into a form of a large-sized single particle, an average particle diameter of the resulting positive electrode active material in the form of a single particle is not large and there is a problem in that capacity retention of a battery including the same is not significantly improved.

### DISCLOSURE OF THE INVENTION

### TECHNICAL PROBLEM

An aspect of the present invention provides a positive electrode active material precursor capable of achieving a positive electrode active material in a form of a single particle which may improve capacity retention of a battery.

Another aspect of the present invention provides a method of preparing the positive electrode active material precursor.

Another aspect of the present invention provides a method of preparing a positive electrode active material using the above positive electrode active material precursor.

Another aspect of the present invention provides the positive electrode active material in the form of a single particle which may improve the capacity retention of the battery.

### TECHNICAL SOLUTION

The present invention provides a positive electrode active material precursor, a method of preparing the same, a method of preparing a positive electrode active material using the same, and the positive electrode active material.
(1) The present invention provides a positive electrode active material precursor which includes a lithium composite transition metal oxide in a form of a single particle, in which a molar ratio (Li/Me) of lithium to total transition metals is in a range 0.01 to 0.7, and has a pellet density of 3.0 g/cm³ to 4.0 g/cm³.
(2) The present invention provides the positive electrode active material precursor of (1) above, wherein the pellet density is in a range of 3.4 g/cm³ to 4.0 g/cm³.
(3) The present invention provides the positive electrode active material precursor of (1) or (2) above, wherein the lithium composite transition metal oxide in the form of a single particle, in which the molar ratio of the lithium to the total transition metals is in a range of 0.01 to 0.7, has an average particle diameter (D₅₀) of 5.0 µm to 15.0 µm.
(4) The present invention provides the positive electrode active material precursor of any one of (1) to (3) above, wherein the lithium composite transition metal oxide in the form of a single particle, in which the molar ratio of the lithium to the total transition metals is in a range of 0.01 to 0.7, includes 60 mol% or more of nickel based on total transition metals excluding lithium.
(5) The present invention provides the positive electrode active material precursor of any one of (1) to (4) above, wherein the lithium composite transition metal oxide in the form of a single particle, in which the molar ratio of the lithium to the total transition metals is in a range of 0.01 to 0.7, has a composition represented by Formula 1.

   [Formula 1] LiₓNiₐM1_{b}M2_{c}O_{y}

   In Formula 1,
   M1 is at least one selected from cobalt (Co), manganese (Mn), and aluminum (Al),
   M2 is at least one selected from boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), tungsten (W), sodium (Na), and lanthanum (La), and
   0.01≤x≤0.7, 0.60≤a<1.0, 0<b≤0.40, 0≤c≤0.1, 1≤y≤2, and a+b+c=1.
(6) Also, the present invention provides a method of preparing a positive electrode active material precursor which includes steps of: (A) preparing a mixture by mixing a lithium-containing doping material and at least one selected from a composite transition metal hydroxide and a composite transition metal oxyhydroxide such that a molar ratio of lithium included in the lithium-containing doping material to total transition metals included in the at least one selected from the composite transition metal hydroxide and the composite transition metal oxyhydroxide is in a range of 0.01 to 0.7; and (B) preparing a lithium composite transition metal oxide in a form of a single particle, in which the molar ratio of the lithium to the total transition metals is in a range of 0.01 to 0.7, by sintering the mixture at a temperature of 800°C to 1,200°C.
(7) The present invention provides the method of (6) above, wherein the composite transition metal hydroxide and the composite transition metal oxyhydroxide include 60 mol% or more of nickel based on the total transition metals.
(8) The present invention provides the method of (6) or (7) above, wherein the lithium-containing doping material is at least one selected from lithium carbonate, lithium hydroxide, lithium oxide, lithium sulfate, lithium chloride, lithium nitrate, lithium acetate, and lithium phosphate.
(9) The present invention provides the method of any one of (6) to (8) above, wherein the sintering in step (B) is performed in an air or oxygen atmosphere.
(10) Furthermore, the present invention provides a method of preparing a positive electrode active material which includes a step of: preparing a lithium composite transition metal oxide in a form of a single particle, in which a molar ratio of lithium to total transition metals is in a range of 0.9 to 1.1, by mixing the positive electrode active material precursor of any one of (1) to (5) above with a lithium-containing raw material and sintering the mixture at a temperature of 700°C to 1,100°C, wherein the lithium-containing raw material is mixed such that a molar ratio of total lithium included in the positive electrode active material precursor and the lithium-containing raw material to total transition metals excluding lithium, which are included in the positive electrode active material precursor, is in a range of 0.9 to 1.1.
(11) The present invention provides the method of (10) above, wherein the sintering includes performing secondary sintering at a temperature of 650°C to 900°C, after performing primary sintering at a temperature of 700°C to 1,100°C.
(12) Also, the present invention provides a positive electrode active material which includes a lithium composite transition metal oxide in a form of a single particle in which a molar ratio of lithium to total transition metals is in a range of 0.9 to 1.1, has a span value ([D₉₀-D₁₀]/D₅₀) of 0.800 to 1.00, and has an absolute value of negative skewness of 0.3000 to 0.7000.
(13) The present invention provides the positive electrode active material of (12) above, wherein the lithium composite transition metal oxide, in which the molar ratio of the lithium to the total transition metals is in a range of 0.9 to 1.1, has an average particle diameter (D₅₀) of 5.0 µm to 15.0 µm.
(14) The present invention provides the positive electrode active material of any one of (12) or (13) above, wherein the lithium composite transition metal oxide, in which the molar ratio of the lithium to the total transition metals is in a range of 0.9 to 1.1, includes 60 mol% or more of nickel based on total transition metals excluding lithium.
(15) The present invention provides the positive electrode active material of any one of (12) to (14) above, wherein the lithium composite transition metal oxide, in which the molar ratio of the lithium to the total transition metals is in a range of 0.9 to 1.1, has a composition represented by Formula 4.

[Formula 4] Liₓ,[Niₐ,M1_{b},M2_{c},]O₂

In Formula 4,
M1 is at least one selected from Co, Mn, and Al,
M2 is at least one selected from B, Mg, Ca, Ti, V, Cr, Fe, Zn, Ga, Y, Zr, Nb, Mo, Ta, W, Na, and La, and
0.9≤x'≤1.1, 0.6≤a'<1.0, 0<b'≤0.4, 0<c'≤0.1, and a'+b'+c'=1.

### ADVANTAGEOUS EFFECTS

Since a positive electrode active material prepared using a positive electrode active material precursor according to the present invention has a form of a single particle and has a high degree of single-particle formation while having a narrow particle size distribution, it may improve capacity retention of a battery.

### BRIEF DESCRIPTION OF THE DRAWINGS

FIG. 1(A) is a scanning electron microscope (SEM) image of a positive electrode active material precursor of Example 1, and FIG. 1(B) is an SEM image of a positive electrode active material of Example 1.
FIG. 2(A) is an SEM image of a positive electrode active material precursor of Example 2, and FIG. 2(B) is an SEM image of a positive electrode active material of Example 2.
FIG. 3(A) is an SEM image of a positive electrode active material precursor of Example 3, and FIG. 3(B) is an SEM image of a positive electrode active material of Example 3.
FIG. 4(A) is an SEM image of a positive electrode active material precursor of Comparative Example 1, and FIG. 4(B) is an SEM image of a positive electrode active material of Comparative Example 1.
FIG. 5(A) is an SEM image of a positive electrode active material precursor of Comparative Example 2, and FIG. 5(B) is an SEM image of a positive electrode active material of Comparative Example 2.
FIG. 6(A) is an SEM image of a positive electrode active material precursor of Comparative Example 3, and FIG. 6(B) is an SEM image of a positive electrode active material of Comparative Example 3.
FIG. 7(A) is an SEM image of a positive electrode active material precursor of Comparative Example 4, and FIG. 7(B) is an SEM image of a positive electrode active material of Comparative Example 4.
FIG. 8 is an SEM image of a composite transition metal hydroxide having a D₅₀ of 9 µm which has been used in Examples 1 and 2 and Comparative Examples 1, 3, and 4.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

D₁₀, an average particle diameter (D₅₀), and D₉₀ in the present specification may be defined as particle diameters at a cumulative volume of 10%, 50%, and 90% in a particle size distribution curve (graph curve of particle size distribution), respectively. The D₁₀, the average particle diameter (D₅₀), and the D₉₀, for example, may be measured by using a laser diffraction method. The laser diffraction method may generally measure a particle diameter ranging from a submicron level to a few mm and may obtain highly repeatable and highresolution results. The D₁₀, average particle diameter (D₅₀), and D₉₀ may specifically be measured using a PSA (Microtrac, S3500).

The term "on" in the present specification means not only a case in which one component is formed directly on an upper surface of another component, but also includes a case in which intervening components may also be present.

In the present specification, a single particle form is a concept in contrast to a spherical secondary particle form which is formed by aggregation of tens to hundreds of primary particles prepared by a conventional method, wherein it is a form in which particles are separated and/or dispersed from each other to form each independent and/or separated phase for each particle, but may include a form in which 2 to 10 particles are attached to each other. That is, the single particle form may be a form composed of only one particle or a form composed of 2 to 10 primary particles.

In the present specification, a primary particle means a smallest unit particle which is observed during scanning electron microscope (SEM) measurement. A secondary particle means an aggregate, in which the primary particles are aggregated by physical or chemical bonds between the primary particles without an intentional aggregation or assembly process for the primary particles constituting the secondary particle, that is, a secondary structure.

In the present specification, a high degree of single-particle formation in a lithium composite transition metal oxide or positive electrode active material in the form of a single particle means that the number of primary particles constituting one particle is small from a morphological point of view, and means that a size of the primary particle is correspondingly large.

In this specification, using an Auto Pellet Press (Carver, 3887.4), after putting 3 g of a sample into a pellet holder having a diameter of 13 mm and adjusting a zero point, a force is applied until it reaches 2,000 kgf, a pellet thickness in this case is measured to obtain a pellet volume, and pellet density is a value calculated according to Equation 1 below. Pellet density (g/cm3) = positive electrode active material precursor weight (g)/pellet volume (cm3)

In this specification, a negative skewness of the positive electrode active material may be obtained by a method of calculating Pearson's asymmetry coefficient using a median, and may specifically be obtained according to Equation 2 below. Negative skewness = [3× (median-average particle diameter (D50))]/(standard deviation)

In Equation 2, the median is a data value corresponding to a center (middle) among all data of particle size distribution of particles, the average particle diameter is as described above, and the standard deviation represents a degree of dispersion in the particle size distribution of the particles and means a degree of dispersion based on a mode. The median, average particle diameter (D₅₀), and standard deviation may be measured or calculated using the PSA (Microtrac, S3500).

### Positive Electrode Active Material Precursor

A positive electrode active material precursor according to the present invention includes a lithium composite transition metal oxide in a form of a single particle, in which a molar ratio (Li/Me) of lithium to total transition metals is in a range of 0.01 to 0.7, and has a pellet density of 3.0 g/cm³ to 4.0 g/cm³.

As a result of a significant amount of research conducted into developing a positive electrode active material in a form of a single particle which has a high degree of single-particle formation while having a narrow particle size distribution, the present inventors have found that, in a case in which the positive electrode active material precursor including the lithium composite transition metal oxide in the form of a single particle, in which the molar ratio (Li/Me) of the lithium to the total transition metals is in a range of 0.01 to 0.7, and having a pellet density of 3.0 g/cm³ to 4.0 g/cm³ is used as a positive electrode active material precursor, positive electrode active materials in a form a single particle, which have various average particle diameters (D₅₀) and a high degree of single-particle formation while having a narrow particle size distribution, may be prepared, thereby leading to the completion of the present invention.

With respect to the lithium composite transition metal oxide included in the positive electrode active material precursor of the present invention, the molar ratio (Li/Me) of the lithium to the total transition metals satisfies 0.01 to 0.7, and the lithium composite transition metal oxide is in the form of a single particle due to a resulting flux effect. Specifically, the lithium composite transition metal oxide in the form of a single particle, which is included in the positive electrode active material precursor, may have a molar ratio (Li/Me) of lithium to total transition metals of 0.01 or more, 0.03 or more, 0.3 or less, 0.5 or less, and 0.7 or less.

With respect to a lithium composite transition metal oxide in which the molar ratio (Li/Me) of the lithium to the total transition metals is less than 0.01, since the flux effect does not occur, the lithium composite transition metal oxide does not have a single particle form and its volume is about 20% smaller than that of a composite transition metal hydroxide positive electrode active material precursor, and thus, it is difficult to prepare a positive electrode active material in the form of a single particle which has a large average particle diameter (D₅₀). In addition, with respect to a lithium composite transition metal oxide in which the molar ratio (Li/Me) of the lithium to the total transition metals is greater than 0.7, it has a single particle form, but, in this case, since an amount of a lithium-containing raw material, which may be used in a process of preparing a positive electrode active material by mixing the positive electrode active material precursor and the lithium-containing raw material according to stoichiometry and then sintering, is reduced, it is difficult to form a structurally stable positive electrode active material and, as a result, electrochemical performance may be degraded.

The positive electrode active material precursor according to the present invention has a pellet density of 3.0 g/cm³ to 4.0 g/cm³, wherein, in this case, since density of a positive electrode active material prepared by using the positive electrode active material precursor is high, particle breakage does not occur even if a high pressure is applied in a rolling process during preparation of an electrode, and thus, high energy density may be achieved. Specifically, the positive electrode active material precursor may have a pellet density of 3 g/cm³ or more, 3.1 g/cm³ or more, 3.2 g/cm³ or more, 3.3 g/cm³ or more, 3.4 g/cm³ or more, 3.8 g/cm³ or less, 3.9 g/cm³ or less, and 4.0 g/cm³ or less.

In a case in which the pellet density of the positive electrode active material precursor is less than 3.0 g/cm³, since the density of the positive electrode active material prepared by using the positive electrode active material precursor is low, the particle breakage easily occurs in the rolling process during the preparation of the electrode, high energy density may not be achieved, and, in a case in which the pellet density is greater than 4.0 g/cm³, since the density of the positive electrode active material prepared by using the positive electrode active material precursor is excessively high, there is a problem in that the positive electrode active material is not mixed with a conductive agent during the preparation of the electrode and aggregation between positive electrode active material particles occurs.

According to the present invention, the lithium composite transition metal oxide in the form of a single particle, in which the molar ratio (Li/Me) of the lithium to the total transition metals is in a range of 0.01 to 0.7, may have an average particle diameter (D₅₀) of 5.0 µm to 15.0 µm. Specifically, the average particle diameter (D₅₀) of the lithium composite transition metal oxide in the form of a single particle, in which the molar ratio (Li/Me) of the lithium to the total transition metals is in a range of 0.01 to 0.7, may be 5.0 µm or more, 6.0 µm or more, 7.0 µm or more, 8.0 µm or more, 12.0 µm or less, 13.0 µm or less, 14.0 µm or less, and 15.0 µm or less. In this case, since density of an electrode, which includes the positive electrode active material prepared by using the positive electrode active material precursor according to the present invention, is high, high energy density may be achieved.

According to the present invention, the lithium composite transition metal oxide in the form of a single particle, in which the molar ratio (Li/Me) of the lithium to the total transition metals is in a range of 0.01 to 0.7, may include 60 mol% or more of nickel based on total transition metals excluding lithium, and, specifically, may have a composition represented by Formula 1 below. In this case, high capacity may be achieved because a potential of the positive electrode active material is reduced at the same voltage due to the high nickel content.

[Formula 1] ^{Li,Ni.M1,M2.0,}

In Formula 1,
M1 is at least one selected from cobalt (Co), manganese (Mn), and aluminum (Al),
M2 is at least one selected from boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), tungsten (W), sodium (Na), and lanthanum (La), and
0.01≤x≤0.7, 0.60≤a<1.0, 0<b≤0.40, 0≤c≤0.1, 1≤y≤2, and a+b+c=1.

### Method of Preparing Positive Electrode Active Material Precursor

A method of preparing a positive electrode active material precursor according to the present invention includes the steps of: (A) preparing a mixture by mixing a lithium-containing doping material and at least one selected from a composite transition metal hydroxide and a composite transition metal oxyhydroxide such that a molar ratio (Li/Me) of lithium included in the lithium-containing doping material to total transition metals included in the at least one selected from the composite transition metal hydroxide and the composite transition metal oxyhydroxide is in a range of 0.01 to 0.7; and (B) preparing a lithium composite transition metal oxide in a form of a single particle, in which the molar ratio (Li/Me) of the lithium to the total transition metals is in a range of 0.01 to 0.7, by sintering the mixture at a temperature of 800°C to 1,200°C.

A positive electrode active material precursor, which is prepared according to the method of preparing a positive electrode active material precursor, may be the positive electrode active material precursor according to the present invention. That is, it may be the positive electrode active material precursor which includes the lithium composite transition metal oxide in the form of a single particle, in which the molar ratio (Li/Me) of the lithium to the total transition metals is in a range of 0.01 to 0.7, and has a pellet density of 3.0 g/cm³ to 4.0 g/cm³.

The present inventors have found that an oxide precursor prepared by adding a specific amount of the lithium-containing doping material has higher density than a conventional positive electrode active material precursor, and a positive electrode active material, which is prepared by using the positive electrode active material precursor prepared according to the present invention, is in the form of a single particle with a high degree of single-particle formation while having a narrow particle size distribution, thereby leading to the completion of the present invention.

Hereinafter, the method of preparing a positive electrode active material precursor will be described in detail for each step.

### Step (A)

Step (A) is a step of preparing a mixture by mixing a lithium-containing doping material and at least one selected from a composite transition metal hydroxide and a composite transition metal oxyhydroxide such that a molar ratio (Li/Me) of lithium included in the lithium-containing doping material to total transition metals included in the at least one selected from the composite transition metal hydroxide and the composite transition metal oxyhydroxide is in a range of 0.01 to 0.7.

The present invention is characterized in that, in order for the resulting positive electrode active material precursor to include the lithium composite transition metal oxide in the form of a single particle in which the molar ratio (Li/Me) of the lithium to the total transition metals is in a range of 0.01 to 0.7, the lithium-containing doping material and the at least one selected from the composite transition metal hydroxide and the composite transition metal oxyhydroxide are mixed such that the molar ratio (Li/Me) of the lithium included in the lithium-containing doping material to the total transition metals included in the at least one selected from the composite transition metal hydroxide and the composite transition metal oxyhydroxide is in a range of 0.01 to 0.7.

In a case in which the lithium-containing doping material and the at least one selected from the composite transition metal hydroxide and the composite transition metal oxyhydroxide are mixed such that the molar ratio (Li/Me) of the lithium included in the lithium-containing doping material to the total transition metals included in the at least one selected from the composite transition metal hydroxide and the composite transition metal oxyhydroxide is less than 0.01, since primary particles do not grow significantly during the sintering in step (B), an oxide (precursor) in the form of a single particle is not formed and there is a problem in that boundaries of the primary particles remain. In addition, in a case in which the lithium-containing doping material and the at least one selected from the composite transition metal hydroxide and the composite transition metal oxyhydroxide are mixed such that the molar ratio (Li/Me) of the lithium included in the lithium-containing doping material to the total transition metals included in the at least one selected from the composite transition metal hydroxide and the composite transition metal oxyhydroxide is greater than 0.7, for example, 0.9, the oxide (precursor) in the form of a single particle is prepared through the sintering in step (B), but, in this case, since an amount of a lithium-containing raw material, which may be used in a process of preparing a positive electrode active material by mixing the positive electrode active material precursor and the lithium-containing raw material according to stoichiometry and then sintering, is reduced, it is difficult to form a structurally stable positive electrode active material, and, as a result, electrochemical performance may be degraded.

According to the present invention, in order to achieve high energy density, the composite transition metal hydroxide and the composite transition metal oxyhydroxide may include 60 mol% or more of nickel based on the total transition metals.

The composite transition metal hydroxide may have a composition represented by Formula 2 below, and the composite transition metal oxyhydroxide may have a composition represented by Formula 3 below.

[Formula 2] Niₐ₂M1₅₂M2_{c2}(OH)₂

In Formula 2, M1 is at least one selected from Co, Mn, and Al, M2 is at least one selected from B, Mg, Ca, Ti, V, Cr, Fe, Zn, Ga, Y, Zr, Nb, Mo, Ta, W, Na, and La, and 0.60≤a2<1.0, 0<b2≤0.40, 0≤c2≤0.1, and a2+b2+c2=1.

[Formula 3] Niₐ₂M1_{b2}M2_{c2}O·OH

In Formula 3, M1 is at least one selected from Co, Mn, and Al, M2 is at least one selected from B, Mg, Ca, Ti, V, Cr, Fe, Zn, Ga, Y, Zr, Nb, Mo, Ta, W, Na, and La, and 0.60≤a2<1.0, 0<b2≤0.40, 0≤c2≤0.1, and a2+b2+c2=1.

According to the present invention, the lithium-containing doping material may be at least one selected from lithium carbonate, lithium hydroxide, lithium oxide, lithium sulfate, lithium chloride, lithium nitrate, lithium acetate, and lithium phosphate. Specifically, the lithium-containing doping material may be Li₂CO₃, LiOH, or a combination thereof.

### Step (B)

Step (B) is a step of preparing a lithium composite transition metal oxide in a form of a single particle, in which the molar ratio (Li/Me) of the lithium to the total transition metals is in a range of 0.01 to 0.7, by sintering the mixture at a temperature of 800°C to 1,200°C. If the mixture is sintered at a temperature of 800°C to 1,200°C, a lithium composite transition metal oxide in the form of a single particle, in which the molar ratio (Li/Me) of the lithium to the total transition metals is in a range of 0.01 to 0.7, may be obtained. The sintering in step (B) may specifically be performed at temperature of 800°C or higher, 850°C or higher, 900°C or higher, 950°C or higher, 1,000°C or less, 1,050°C or less, 1,100°C or less, 1,150°C or less, and 1,200°C or less.

In a case in which the mixture is sintered at a temperature of less than 800°C, since the lithium-containing doping materials do not melt and remain on a surface, there is a problem in that growth (expansion) of the particle does not occur, and, in a case in which the mixture is sintered at a temperature of greater than 1,200°C, since the mixture is oversintered, a phase of the lithium composite transition metal oxide is formed into an energetically most stable NiO-phase, wherein there is a problem in that it is difficult to recrystallize the NiO-phase into an ideal layered structure. In addition, modification of an alumina crucible, a commonly used crucible, may occur, and, as a result, an undesirable material may be formed.

According to the present invention, the sintering in step (B) may be performed in an air or oxygen atmosphere.

The sintering in step (B) may be performed for 1 hour to 20 hours.

### Method of Preparing Positive Electrode Active Material

A method of preparing a positive electrode active material according to the present invention includes a step of: mixing the positive electrode active material precursor according to the present invention with a lithium-containing raw material such that a molar ratio of total lithium included in the positive electrode active material precursor and the lithium-containing raw material to total transition metals excluding lithium, which are included in the positive electrode active material precursor, is in a range of 0.9 to 1.1 and then sintering the mixture at 700°C to 1,100°C to prepare a lithium composite transition metal oxide in a form of a single particle in which a molar ratio (Li/Me) of lithium to total transition metals is in a range of 0.9 to 1.1. In this case, in a case in which the sintering temperature is in a range of 700°C to 1,100°C, the NiO-phase may be stably recrystallized into a layered structure. In a case in which the sintering temperature in the preparing of the positive electrode active material is less than 700°C, there is a problem in that the recrystallization does not occur due to insufficient thermal energy, and, in a case in which the sintering temperature is greater than 1,100°C, there is a problem in that a stable layered structure is not formed.

The lithium-containing raw material may be at least one selected from lithium carbonate, lithium hydroxide, lithium oxide, lithium sulfate, lithium chloride, lithium nitrate, lithium acetate, lithium phosphate, and hydrates thereof. The lithium-containing raw material may specifically be at least one selected from lithium carbonate, lithium hydroxide, lithium oxide, and hydrates thereof, and may more specifically be at least one selected from lithium carbonate, lithium hydroxide, and hydrates thereof. In this case, reactivity of the lithium-containing raw material and the precursor with a high atomic fraction of nickel among metallic elements in the precursor may be improved, and, since gases generated during a sintering process are CO₂ or H₂O, there is an advantage in that the gases are not harmful and may be easily removed.

According to the present invention, the lithium-containing raw material is mixed such that the molar ratio of the total lithium included in the positive electrode active material precursor and the lithium-containing raw material to the total transition metals excluding lithium, which are included in the positive electrode active material precursor, is in a range of 0.9 to 1.1. In this case, since a structure of the resulting positive electrode active material becomes an ideal layered structure, electrochemical performance may be excellent.

In a case in which the lithium-containing raw material is mixed such that the molar ratio of the total lithium included in the positive electrode active material precursor and the lithium-containing raw material to the total transition metals excluding lithium, which are included in the positive electrode active material precursor, is less than 0.9, since there is a lack of lithium in the structure of the resulting positive electrode active material, an amount of lithium, which may reversibly move, is reduced, and, as a result, problems with electrochemical performance may occur. In addition, in a case in which the lithium-containing raw material is mixed such that the molar ratio of the total lithium included in the positive electrode active material precursor and the lithium-containing raw material to the total transition metals excluding lithium, which are included in the positive electrode active material precursor, is greater than 1.1, since the lithium-containing raw material remaining without reacting with the precursor is present on a surface of the positive electrode active material to act as a lithium by-product, problems with gelation of an electrode slurry occur during the preparation of the electrode and there is a problem of increasing a gas generation amount of the battery.

According to the present invention, the sintering in the method of preparing a positive electrode active material may include performing secondary sintering at a temperature of 700°C to 900°C, after performing primary sintering at a temperature of 800°C to 1,100°C. Specifically, the sintering may include i) immediately after performing primary sintering at a temperature of 800°C to 1,100°C, adjusting the temperature to 700°C to 900°C, and performing secondary sintering at a temperature of 700°C to 900°C, or ii) after performing primary sintering at a temperature of 800°C to 1,100°C, decreasing the temperature to room temperature, and increasing the temperature again to perform secondary sintering at a temperature of 700°C to 900°C. In this case, the secondary sintering temperature may be lower than the primary sintering temperature. In a case in which the sintering is performed as in ii) above, more specifically, the sintering may include performing secondary sintering at a temperature of 750°C to 850°C, after grinding a primary sintered product prepared by performing primary sintering at a temperature of 800°C to 1,000°C.

The sintering in the method of preparing a positive electrode active material may be performed in an air or oxygen atmosphere. Accordingly, the primary sintering and the secondary sintering may also be performed in an air or oxygen atmosphere.

The sintering in the method of preparing a positive electrode active material may be performed for a sufficient time, specifically, 3 hours to 20 hours to form a stable layered structure. The primary sintering may be performed for 3 hours to 20 hours, and the secondary sintering may be performed for 3 hours to 20 hours.

The positive electrode active material prepared according to the method of preparing a positive electrode active material includes the lithium transition metal oxide in the form of a single particle in which the molar ratio (Li/Me) of the lithium to the total transition metals is in a range of 0.9 to 1.1, and may have a high degree of single-particle formation while having a narrow particle size distribution.

The positive electrode active material prepared according to the method of preparing a positive electrode active material may have a span value ([D₉₀-D₁₀]/D₅₀) of 0.800 to 1.00. In addition, the positive electrode active material prepared according to the method of preparing a positive electrode active material may have an absolute value of negative skewness of 0.3000 to 0.7000 or less. Also, the positive electrode active material prepared according to the method of preparing a positive electrode active material may have a composition represented by Formula 4 below.

[Formula 4] Li_{x'}[Ni_{a'}M1_{b'},M2_{c'}]O₂

In Formula 4,
M1 is at least one selected from Co, Mn, and Al, M2 is at least one selected from B, Mg, Ca, Ti, V, Cr, Fe, Zn, Ga, Y, Zr, Nb, Mo, Ta, W, Na, and La, and 0.9≤x'≤1.1, 0.6≤a'<1.0, 0<b'≤0.4, 0<c'≤0.1, and a'+b'+c'=1.

### Positive Electrode Active Material

A positive electrode active material according to the present invention includes a lithium composite transition metal oxide in a form of a single particle in which a molar ratio (Li/Me) of lithium to total transition metals is in a range of 0.9 to 1.1, has a span value ([D₉₀-D₁₀]/D₅₀) of 0.800 to 1.00, and has an absolute value of negative skewness of 0.3000 to 0.7000. Since the positive electrode active material has a high degree of single-particle formation while having a narrow particle size distribution, it may improve performance of a battery when used in the battery. Particularly, capacity retention may be further improved.

The positive electrode active material according to the present invention is a positive electrode active material prepared by using the positive electrode active material precursor according to the present invention, wherein it may be prepared by the method of preparing a positive electrode active material according to the present invention.

According to the present invention, the lithium composite transition metal oxide in the form of a single particle, in which the molar ratio (Li/Me) of the lithium to the total transition metals is in a range of 0.9 to 1.1, may have an average particle diameter (D₅₀) of 7.0 µm to 13.0 µm. Specifically, the average particle diameter (D₅₀) of the lithium composite transition metal oxide in the form of a single particle, in which the molar ratio (Li/Me) of the lithium to the total transition metals is in a range of 0.9 to 1.1, may be 7.0 µm or more, 7.1 µm or more, 7.2 µm or more, 10.0 µm or less, 11.0 µm or less, 12.0 µm or less, and 13.0 µm or less. In this case, since the density of the electrode including the positive electrode active material is high, high energy density may be achieved.

According to the present invention, the lithium composite transition metal oxide in the form of a single particle, in which the molar ratio (Li/Me) of the lithium to the total transition metals is in a range of 0.9 to 1.1, may include 60 mol% or more of nickel based on total transition metals excluding lithium, and, specifically, may have a composition represented by Formula 4 below. In this case, high capacity may be achieved because a potential of the positive electrode active material is reduced at the same voltage due to the high nickel content.

[Formula 4] Li_{x'}[Ni_{a'}M1_{b'}M2_{c'}]O₂

In Formula 4,
M1 is at least one selected from Co, Mn, and Al,
M2 is at least one selected from B, Mg, Ca, Ti, V, Cr, Fe, Zn, Ga, Y, Zr, Nb, Mo, Ta, W, Na, and La, and
0.9≤x'≤1.1, 0.6≤a'<1.0, 0<b'≤0.4, 0<c'≤0.1, and a' +b' +c' =1.

### Positive Electrode

Also, the present invention may provide a positive electrode for a lithium secondary battery which includes the positive electrode active material prepared by the above-described method.

Specifically, the positive electrode includes a positive electrode collector and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the positive electrode active material.

The positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent cycle characteristics, the lithium secondary battery is suitable for portable devices, such as mobile phones, notebook computers, and digital cameras, and electric cars such as hybrid electric vehicles (HEVs).

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

A mixture was prepared by mixing a composite transition metal hydroxide (D₅₀: 9 µm) having a composition represented by Ni_{0.96}Co_{0.03}Mn_{0.01}(OH)₂ and LiOH, a lithium-containing doping material, using an acoustic mixer such that a molar ratio (Li/Me) of lithium (Li) included in the LiOH to total transition metals (Me) included in the composite transition metal hydroxide was 0.3.

The mixture was sintered at 1,020°C for 9 hours in an air atmosphere to prepare a lithium composite transition metal oxide (hereinafter, referred to as positive electrode active material precursor A) in a form of a single particle which had a composition represented by Li_{0.3}Ni_{0.96}Co_{0.03}Mn_{0.01}O_{1.3}.

The positive electrode active material precursor A and LiOH were mixed such that a molar ratio (Li'/Me') of total lithium included in the positive electrode active material precursor and the LiOH to total transition metals (Me') excluding lithium, which were included in the positive electrode active material precursor, was 1.0, and the mixture was primarily sintered at 830°C for 12 hours in an oxygen atmosphere, then ground using a jet mill, and secondarily sintered at 770°C for 12 hours in an oxygen atmosphere to prepare positive electrode active material A, a lithium composite transition metal oxide in a form of a single particle which had a composition represented by LiNi_{0.96}Co_{0.01}Mn_{0.01}O₂.

For reference, the number of moles of the total lithium included in the positive electrode active material precursor and the LiOH is a sum of the number of moles of lithium included in the positive electrode active material precursor and the number of moles of lithium included in the LiOH.

### Example 2

A lithium composite transition metal oxide (hereinafter, referred to as positive electrode active material precursor B) in a form of a single particle, which had a composition represented by Li_{0.5}Ni_{0.96}Co_{0.03}Mn_{0.01}O_{1.5}, was prepared in the same manner as in Example 1 except that a mixture was prepared by mixing a composite transition metal hydroxide (D₅₀: 9 µm) having a composition represented by Ni_{0.96}Co_{0.03}Mn_{0.01}(OH)₂ and LiOH, a lithium-containing doping material, using an acoustic mixer such that a molar ratio (Li/Me) of lithium included in the LiOH to total transition metals included in the composite transition metal hydroxide was 0.5.

Positive electrode active material B, a lithium composite transition metal oxide in a form of a single particle, which had a composition represented by LiNi_{0.96}Co_{0.03}Mn_{0.01}O₂, was prepared in the same manner as in Example 1 except that the positive electrode active material precursor B was used.

### Example 3

A lithium composite transition metal oxide (hereinafter, referred to as positive electrode active material precursor C) in a form of a single particle, which had a composition represented by Li_{0.3}Ni_{0.96}Co_{0.03}Mn_{0.01}O_{1.3}, was prepared in the same manner as in Example 1 except that a mixture was prepared by mixing a composite transition metal hydroxide (D₅₀: 6 µm) having a composition represented by Ni_{0.96}Co_{0.03}Mn_{0.01}(OH)₂ and LiOH, a lithium-containing doping material, using an acoustic mixer such that a molar ratio (Li/Me) of lithium included in the LiOH to total transition metals included in the composite transition metal hydroxide was 0.3.

Positive electrode active material C, a lithium composite transition metal oxide in a form of a single particle, which had a composition represented by LiNi_{0.96}Co_{0.03}Mn_{0.01}O₂, was prepared in the same manner as in Example 1 except that the positive electrode active material precursor C was used.

### Comparative Example 1

A composite transition metal hydroxide (D₅₀: 9 µm) having a composition represented by Ni_{0.96}Co_{0.03}Mn_{0.01}(OH)₂ was sintered at 1,020°C for 9 hours in an air atmosphere to prepare a composite transition metal oxide (hereinafter, referred to as positive electrode active material precursor D) having a composition represented by Ni_{0.96}Co_{0.03}Mn_{0.01}O.

The positive electrode active material precursor D and LiOH were mixed such that a molar ratio (Li'/Me') of lithium included in the LiOH to total transition metals excluding lithium, which were included in the positive electrode active material precursor, was 1.0, and the mixture was primarily sintered at 830°C for 12 hours in an oxygen atmosphere, then ground using a jet mill, and secondarily sintered at 770°C for 12 hours in an oxygen atmosphere to prepare positive electrode active material D, a lithium composite transition metal oxide in a form of a single particle which had a composition represented by LiNi_{0.96}Co_{0.03}Mn_{0.01}O₂.

### Comparative Example 2

A composite transition metal hydroxide (D₅₀: 6 having a composition represented by Ni_{0.96}Co_{0.03}Mn_{0.01}(OH)₂ was sintered at 1,020°C for 9 hours in an air atmosphere to prepare a composite transition metal oxide (hereinafter, referred to as positive electrode active material precursor E) having a composition represented by Ni_{0.96}CO_{0.03}Mn_{0.01}O.

The positive electrode active material precursor E and LiOH were mixed such that a molar ratio (Li'/Me') of lithium included in the LiOH to total transition metals excluding lithium, which were included in the positive electrode active material precursor, was 1.0, and the mixture was primarily sintered at 830°C for 12 hours in an oxygen atmosphere, then ground using a jet mill, and secondarily sintered at 770°C for 12 hours in an oxygen atmosphere to prepare positive electrode active material E, a lithium composite transition metal oxide in a form of a single particle which had a composition represented by LiNi_{0.96}Co_{0.03}Mn_{0.01}O₂.

### Comparative Example 3

A lithium composite transition metal oxide (hereinafter, referred to as positive electrode active material precursor F) in a form of a single particle, which had a composition represented by Li_{0.005}Ni_{0.96}Co_{0.03}Mn_{0.01}O_{1.005}, was prepared in the same manner as in Example 1 except that a mixture was prepared by mixing a composite transition metal hydroxide (D₅₀: 9 µm) having a composition represented by Ni_{0.06}Co_{0.03}Mn_{0.01}(OH)₂ and LiOH, a lithium-containing doping material, using an acoustic mixer such that a molar ratio (Li/Me) of lithium included in the LiOH to total transition metals included in the composite transition metal hydroxide was 0.005.

Positive electrode active material F, a lithium composite transition metal oxide in a form of a single particle, which had a composition represented by LiNi_{0.96}C_{0.03}Mn_{0.01}O₂, was prepared in the same manner as in Example 1 except that the positive electrode active material precursor F was used.

### Comparative Example 4

A lithium composite transition metal oxide (hereinafter, referred to as positive electrode active material precursor G) in a form of a single particle, which had a composition represented by Li_{0.9}Ni_{0.96}Co_{0.03}Mn_{0.01}O_{1.9}, was prepared in the same manner as in Example 1 except that a mixture was prepared by mixing a composite transition metal hydroxide (D₅₀: 9 µm) having a composition represented by Ni_{0.96}Co_{0.03}Mn_{0.01}(OH)₂ and LiOH, a lithium-containing doping material, using an acoustic mixer such that a molar ratio (Li/Me) of lithium included in the LiOH to total transition metals included in the composite transition metal hydroxide was 0.9.

Positive electrode active material G, a lithium composite transition metal oxide in a form of a single particle, which had a composition represented by LiNi_{0.96}Co_{0.03}Mn_{0.01}O₂, was prepared in the same manner as in Example 1 except that the positive electrode active material precursor G was used.

### Experimental Examples

### Experimental Example 1

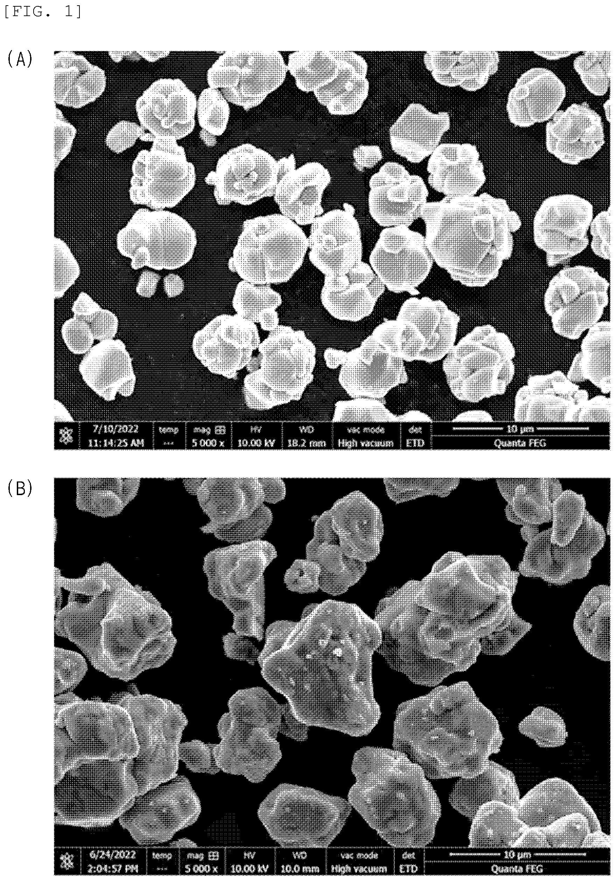

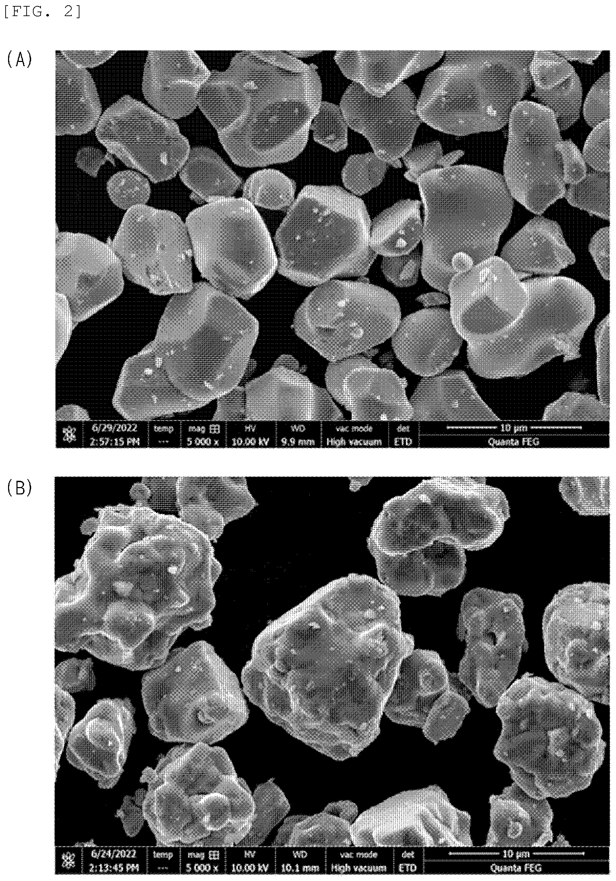

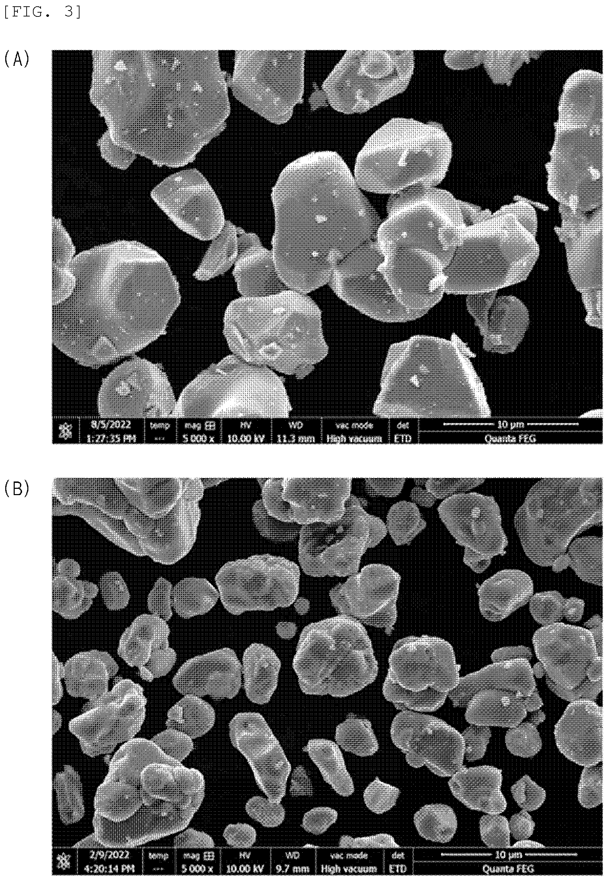

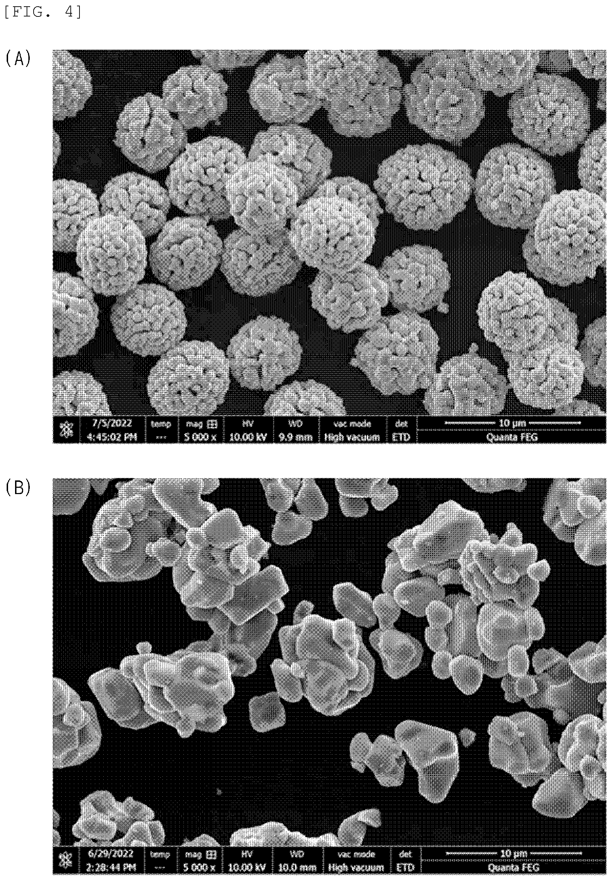

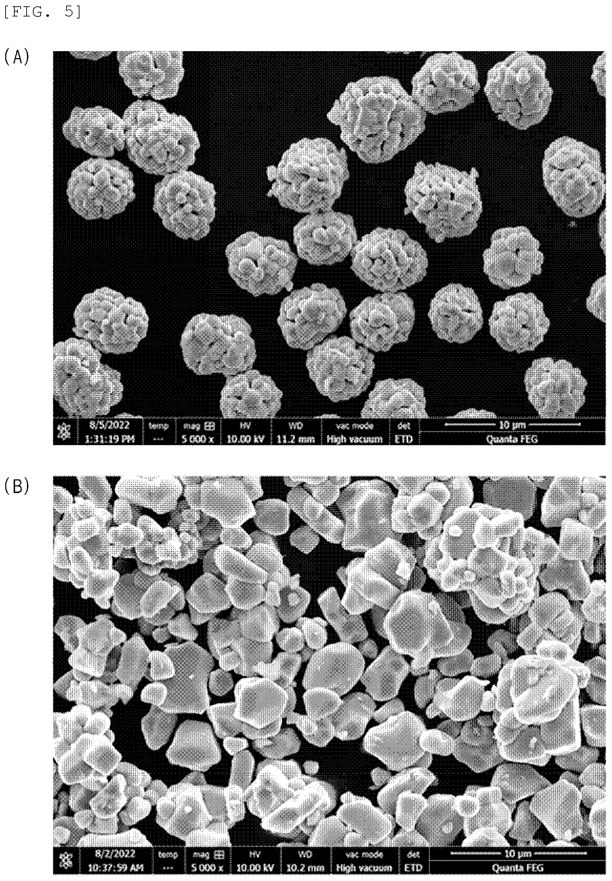

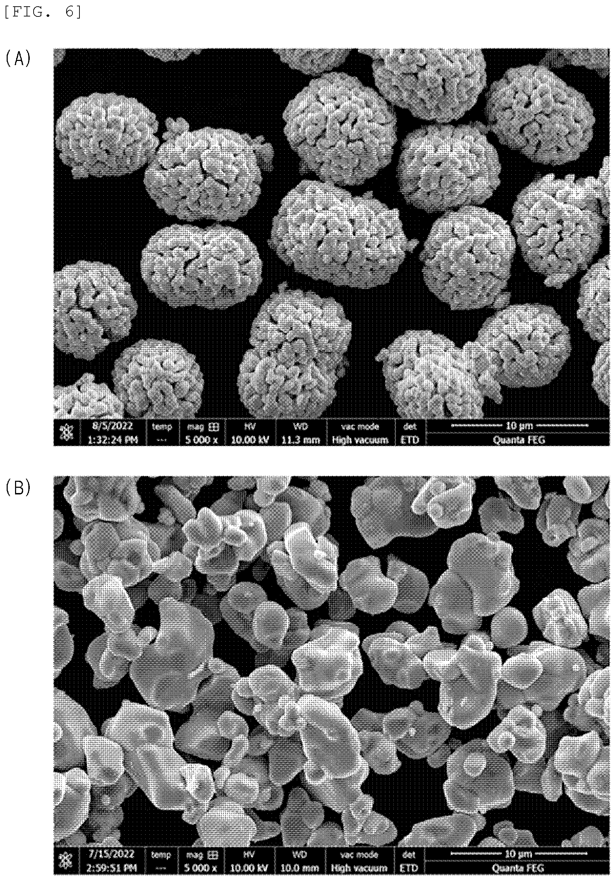

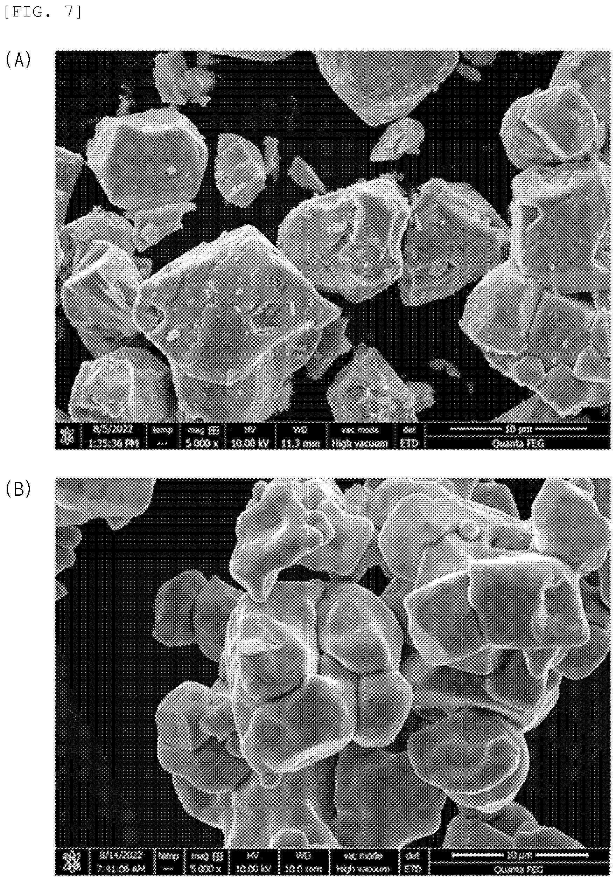

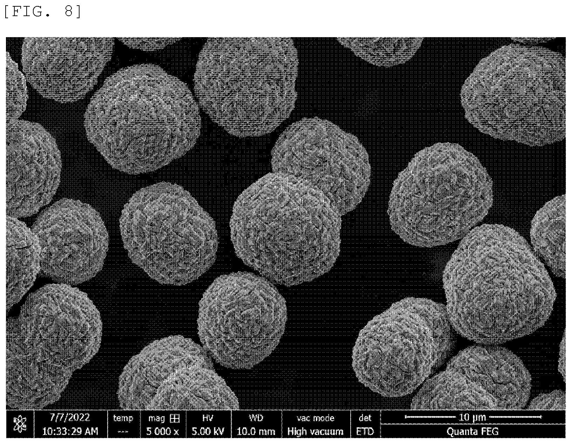

A scanning electron microscope (SEM) image of each of the positive electrode active material precursors and positive electrode active materials of Examples 1 to 3 and Comparative Examples 1 to 4 was measured using an SEM (FEI, Inspect F) and illustrated in FIGS. 1 to 7. In addition, an SEM image of the composite transition metal hydroxide with a D₅₀ of 9 µm used in Examples 1 and 2 and Comparative Examples 1, 3, and 4 was measured and illustrated in FIG. 8.

### Experimental Example 2

Using an Auto Pellet Press (Carver, 3887.4), after collecting 3 g of each of the positive electrode active material precursors of Examples 1 to 3 and Comparative Examples 1 to 4, putting it into a pellet holder having a diameter of 13 mm, and adjusting a zero point, a force was applied until it reached 2,000 kgf, a thickness in this case was measured to obtain a pellet volume, and pellet density was then calculated according to the following Equation 1 and presented in Table 1 below. Pellet density (g/cm3) = positive electrode active material precursor weight (g)/pellet volume (cm3)

### Experimental Example 3

An average particle diameter (D₅₀) of each of the positive electrode active material precursors of Examples 1 to 3 and Comparative Examples 1 to 4 was obtained using a PSA (Microtrac, S3500), and presented in Table 1 below.

Also, D₁₀, average particle diameter (D₅₀), D₉₀, and negative skewness of each of the positive electrode active materials of Examples 1 to 3 and Comparative Examples 1 to 4 were obtained, and the average particle diameter (D₅₀), a span value, and an absolute value of the negative skewness are presented in Table 1 below.

**[Table 1]**

| | Pellet density (g/cm³) | Average particle diameter (D₅₀) of the positive electrode active material precursor (µm) | Average particle diameter (D₅₀) of the positive electrode active material (µm) | Span value of the positive electrode active material | Absolute value of negative skewness of the positive electrode active material |
|---|---|---|---|---|---|
| Example 1 | 3.452 | 8.73 | 7.38 | 0.831 | 0.5421 |
| Example 2 | 3.537 | 12.25 | 9.69 | 0.914 | 0.5818 |
| Example 3 | 3.572 | 11.85 | 7.24 | 0.811 | 0.4947 |
| Comparative Example 1 | 3.095 | 7.36 | 6.23 | 1.165 | 0.7247 |
| Comparative Example 2 | 3.336 | 5.06 | 4.82 | 1.180 | 1.581 |
| Comparative Example 3 | 3.343 | 8.02 | 6.45 | 1.114 | 1.231 |
| Comparative Example 4 | 3.288 | 15.37 | 13.11 | 1.156 | 1.414 |

### Experimental Example 4

Each of the positive electrode active materials prepared in Examples 1 to 3 and Comparative Examples 1 to 4, a carbon black conductive agent, and a polyvinylidene fluoride (PVDF) binder were mixed in an N-methylpyrrolidone (NMP) solvent in a weight ratio of 96:2:2 to prepare a positive electrode slurry. One surface of an aluminum current collector was coated with the positive electrode slurry, dried at 130°C, and then rolled to prepare each positive electrode.

A lithium metal electrode was used as a negative electrode, an electrode assembly was prepared by disposing a porous polyethylene separator between the positive electrode and the negative electrode, the electrode assembly was disposed in a battery case, and an electrolyte solution was then injected into the battery case to prepare a half-cell. In this case, the electrolyte solution was prepared by dissolving 1.0 M LiPF₆ in an organic solvent in which ethylene carbonate(EC):ethyl methyl carbonate (EMC) :diethyl carbonate(DEC) were mixed in a volume ratio of 3:4:3.

Each half-cell thus prepared was charged at 0.1 C-rate to 4.25 V in a constant current/constant voltage (CC/CV) mode at 25°C, and discharged at 0.1 C-rate to 2.5 V to measure initial charge capacity and initial discharge capacity, and initial efficiency was calculated and presented in Table 2 below. For reference, an initial efficiency value is a percentage of the initial discharge capacity to the initial charge capacity.

In addition, capacity of the lithium secondary battery was measured by repeating charge and discharge cycles 50 times at 0.5 C-rate for charging and 1.0 C-rate for discharging in a range of 2.5 V to 4.25 V at 45°C, a percentage of discharge capacity in a 50^{th} cycle to discharge capacity in a 1^{st} cycle was set as a capacity retention, and the capacity retentions are presented in Table 2 below.

**[Table 2]**

| | Initial charge capacity (mAh/g) | Initial discharge capacity (mAh/g) | Initial efficiency (%) | Capacity retention after 50 cycles (%) |
|---|---|---|---|---|
| Example 1 | 238.6 | 205.4 | 86.1 | 95.58 |
| Example 2 | 237.4 | 201.3 | 84.8 | 95.46 |
| Example 3 | 241.8 | 208.1 | 86.1 | 95.01 |
| Comparative Example 1 | 239.1 | 200.8 | 83.4 | 95.06 |
| Comparative Example 2 | 241.1 | 202.7 | 84.1 | 94.29 |
| Comparative Example 3 | 239.5 | 202.3 | 84.5 | 94.7 |
| Comparative Example 4 | 228.7 | 185.5 | 81.1 | 94.5 |

Referring to the SEM images and Tables 1 and 2, in a case in which the positive electrode active material precursor, which included the lithium composite transition metal oxide in the form of a single crystal, in which the molar ratio (Li/Me) of the lithium to the total transition metals was in a range of 0.01 to 0.7, and had a pellet density of 3.0 g/cm³ to 4.0 g/cm³, was used as a positive electrode active material precursor, it may be understood that the positive electrode active materials in the form of a single particle, which had various average particle diameters (D₅₀) and a high degree of single-particle formation while having a narrow particle size distribution, may be prepared. Also, since the positive electrode active materials of Examples 1 to 3 had a high degree of single-particle formation while having a narrow particle size distribution, it may be understood that they may improve performance, particularly, capacity retention of the battery when used in the battery.

Specifically, it may be confirmed that the positive electrode active materials of Examples 1 and 2, which were prepared by using the positive electrode active material precursors which included the lithium composite transition metal oxide in the form of a single crystal, in which the molar ratio (Li/Me) of the lithium to the total transition metals was in a range of 0.01 to 0.7, and had a pellet density of 3.0 g/cm³ to 4.0 g/cm³, had better capacity retention than the positive electrode active material of Comparative Example 1 due to an increase in the degree of single-particle formation. Also, it may be confirmed that the positive electrode active material of Example 3, which was prepared by using the positive electrode active material precursor which included the lithium composite transition metal oxide in the form of a single crystal, in which the molar ratio (Li/Me) of the lithium to the total transition metals was in a range of 0.01 to 0.7, and had a pellet density of 3.0 g/cm³ to 4.0 g/cm³, had better capacity retention than the positive electrode active material of Comparative Example 2 due to an increase in the degree of single-particle formation.

In addition, since the positive electrode active materials of Examples 1 and 2 had a higher degree of single-particle formation than the positive electrode active material of Comparative Example 3 which was prepared by using the lithium composite transition metal oxide having a molar ratio (Li/Me) of lithium to total transition metals of 0.005, it may be confirmed that both initial efficiency and capacity retention were significantly excellent. Furthermore, since the positive electrode active materials of Examples 1 and 2 had higher structural stability and higher degree of single-particle formation than the positive electrode active material of Comparative Example 4 which was prepared by using the lithium composite transition metal oxide having a molar ratio (Li/Me) of lithium to total transition metals of 0.005, it may be confirmed that both initial efficiency and capacity retention were significantly excellent.

## Claims

1. A positive electrode active material precursor comprising a lithium composite transition metal oxide in a form of a single particle, in which a molar ratio (Li/Me) of lithium to total transition metals is in a range of 0.01 to 0.7, and
having a pellet density of 3.0 g/cm³ to 4.0 g/cm³.

2. The positive electrode active material precursor of claim 1, wherein the pellet density is in a range of 3.4 g/cm³ to 4.0 g/cm³.

3. The positive electrode active material precursor of claim 1, wherein the lithium composite transition metal oxide in the form of a single particle, in which the molar ratio of the lithium to the total transition metals is in a range of 0.01 to 0.7, has an average particle diameter (D₅₀) of 5.0 µm to 15.0 µm.

4. The positive electrode active material precursor of claim 1, wherein the lithium composite transition metal oxide in the form of a single particle, in which the molar ratio of the lithium to the total transition metals is in a range of 0.01 to 0.7, comprises 60 mol% or more of nickel based on total transition metals excluding lithium.

5. The positive electrode active material precursor of claim 1, wherein the lithium composite transition metal oxide in the form of a single particle, in which the molar ratio of the lithium to the total transition metals is in a range of 0.01 to 0.7, has a composition represented by Formula 1:
[Formula 1] LiₓNiₐM1_{b}M2_{c}O_{y}
wherein, in Formula 1,
M1 is at least one selected from cobalt (Co), manganese (Mn), and aluminum (Al),
M2 is at least one selected from boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), tungsten (W), sodium (Na), and lanthanum (La), and
0.01≤x≤0.7, 0.60≤a<1.0, 0<b≤0.40, 0≤c≤0.1, 1≤y≤2, and a+b+c=1.

6. A method of preparing a positive electrode active material precursor, the method comprising steps of:
(A) preparing a mixture by mixing a lithium-containing doping material and at least one selected from a composite transition metal hydroxide and a composite transition metal oxyhydroxide such that a molar ratio of lithium included in the lithium-containing doping material to total transition metals included in the at least one selected from the composite transition metal hydroxide and the composite transition metal oxyhydroxide is in a range of 0.01 to 0.7; and
(B) preparing a lithium composite transition metal oxide in a form of a single particle, in which the molar ratio of the lithium to the total transition metals is in a range of 0.01 to 0.7, by sintering the mixture at a temperature of 800°C to 1,200°C.

7. The method of claim 6, wherein the composite transition metal hydroxide and the composite transition metal oxyhydroxide comprise 60 mol% or more of nickel based on the total transition metals.

8. The method of claim 6, wherein the lithium-containing doping material is at least one selected from lithium carbonate, lithium hydroxide, lithium oxide, lithium sulfate, lithium chloride, lithium nitrate, lithium acetate, and lithium phosphate.

9. The method of claim 6, wherein the sintering in step (B) is performed in an air or oxygen atmosphere.

10. A method of preparing a positive electrode active material, the method comprising a step of: preparing a lithium composite transition metal oxide in a form of a single particle, in which a molar ratio of lithium to total transition metals is in a range of 0.9 to 1.1, by mixing the positive electrode active material precursor of any one of claims 1 to 5 with a lithium-containing raw material and sintering the mixture at a temperature of 700°C to 1,100°C,
wherein the lithium-containing raw material is mixed such that a molar ratio of total lithium included in the positive electrode active material precursor and the lithium-containing raw material to total transition metals excluding lithium, which are included in the positive electrode active material precursor, is in a range of 0.9 to 1.1.

11. The method of claim 10, wherein the sintering comprises performing secondary sintering at a temperature of 700°C to 900°C, after performing primary sintering at a temperature of 800°C to 1,100°C.

12. A positive electrode active material comprising a lithium composite transition metal oxide in a form of a single particle in which a molar ratio of lithium to total transition metals is in a range of 0.9 to 1.1,
having a span value ([D₉₀-D₁₀]/D₅₀) of 0.800 to 1.00, and
having an absolute value of negative skewness of 0.3000 to 0.7000.

13. The positive electrode active material of claim 12, wherein the lithium composite transition metal oxide, in which the molar ratio of the lithium to the total transition metals is in a range of 0.9 to 1.1, has an average particle diameter (D₅₀) of 5.0 µm to 15.0 µm.

14. The positive electrode active material of claim 12, wherein the lithium composite transition metal oxide, in which the molar ratio of the lithium to the total transition metals is in a range of 0.9 to 1.1, comprises 60 mol% or more of nickel based on total transition metals excluding lithium.

15. The positive electrode active material of claim 12, wherein the lithium composite transition metal oxide, in which the molar ratio of the lithium to the total transition metals is in a range of 0.9 to 1.1, has a composition represented by Formula 4:
[Formula 4] Li_{x'}[Ni_{a'}M1_{b'}M2_{c'}]O₂
wherein, in Formula 4,
M1 is at least one selected from cobalt (Co), manganese (Mn), and aluminum (Al),
M2 is at least one selected from boron (B), magnesium (Mg), calcium (Ca), titanium (Ti), vanadium (V), chromium (Cr), iron (Fe), zinc (Zn), gallium (Ga), yttrium (Y), zirconium (Zr), niobium (Nb), molybdenum (Mo), tantalum (Ta), tungsten (W), sodium (Na), and lanthanum (La), and
0.9≤x'≤1.1, 0.6≤a'<1.0, 0<b'≤0.4, 0<c'≤0.1, and a'+b'+c'=1.
